Europäisches Patentamt

European Patent Office

Office européen des brevets

(11) Veröffentlichungsnummer: **0 289 891**
**A2**

(12) **EUROPÄISCHE PATENTANMELDUNG**

(21) Anmeldenummer: **88106538.7**

(22) Anmeldetag: **23.04.88**

(51) Int. Cl.⁴: **F02P 5/15**

(30) Priorität: **02.05.87 DE 3714690**

(43) Veröffentlichungstag der Anmeldung:
**09.11.88 Patentblatt 88/45**

(84) Benannte Vertragsstaaten:
**DE ES FR GB IT SE**

(71) Anmelder: **AUDI AG**
**Postfach 220**
**D-8070 Ingolstadt(DE)**

(72) Erfinder: **Gruber, Gerhard**
**Frühlingstrasse 11**
**D-8079 Hitzhofen(DE)**
Erfinder: **Leitner, Peter**
**Neptunstrasse 1**
**D-8074 Gaimersheim(DE)**

(74) Vertreter: **Le Vrang, Klaus**
**AUDI AG Postfach 220 Patentabteilung I/EQP**
**D-8070 Ingolstadt(DE)**

(54) **Verfahren zum Betreiben einer Brennkraftmaschine.**

(57) Zum Betrieb einer Viertakt-Brennkraftmaschine mit Zündrechner und Klopfregelung wird vorgeschlagen, die Festlegung zwischen Zylinderzündung und Kurbelwellenwinkel beim Anlaßvorgang der Brennkraftmaschine dadurch zu ermitteln, daß die Klopfregelung herangezogen wird zur Abfrage, ob ein Verbrennungsvorgang im Zylinder erfolgt ist. Von da ab rechnet der Rechner jede zweite Kurbelwellenumdrehung den nächsten Zündimpuls für den jeweiligen Zylinder aus.

Fig.1

## VERFAHREN ZUM BETREIBEN EINER BRENNKRAFTMASCHINE

Die Erfindung bezieht sich auf ein Verfahren zum Betreiben einer mit einem Zündrechner und einer Klopfregelung ausgerüsteten, fremdgezündeten Viertakt-Brennkraftmaschine gemäß dem Oberbegriff des Anspruchs 1.

Derartige Brennkraftmaschinen, bei denen die genauen Zündzeitpunkte unter Berücksichtigung einer Reihe von Betriebsparametern mit Hilfe eines Mikroprozessors festgelegt werden, sind Stand der Technik.

Dabei ist jedoch das Problem zu lösen, daß bei einer Viertakt-Brennkraftmaschine die Zündung eines jeweiligen Zylinders nur jede zweite Kurbelwellenumdrehung notwendig ist, da die vier Arbeitstakte eines Zylinders insgesamt zwei Kurbelwellenumdrehungen benötigen.

Aus dem Stand der Technik sind eine Reihe von Lösungsmöglichkeiten bekannt, um den dem Arbeitstakt zugeordneten Zündvorgang und die Kurbelwellenstellung genau festzulegen.

Die am häufigsten verwendete Möglichkeit ist, durch die Nockenwelle im Zündverteiler einen Verteilerfinger zu bewegen, der aufgrund des Übersetzungsverhältnisses zwischen Kurbelwelle und Nockenwelle mit halber Geschwindigkeit der Kurbelwelle dreht. Dem Zündzeitpunkt eines Zylinders ist jedesmal eine definierte Verstellung des Verteilerfingers zugeordnet.

In moderneren Verteilern wird die Ansteuerung des jeweiligen Zylinders für die Zündfunkenauslösung über eine Hall-Blende vorgenommen.

Es ist weiterhin vorgeschlagen worden, mit Hilfe der Hall-Blende ein Fenster zu definieren, die genaue Zündauslösung erfolgt durch die Stellung der Kurbelwelle innerhalb dieses zeitlichen Fensters. Damit werden die über die Nockenwelle gesteuerten Ungenauigkeiten aufgrund des Spieles zwischen Nockenwelle und Kurbelwelle vermieden, andererseits ist der Aufwand höher.

Ein anderer Weg ist, die Zündung allein über die Kurbelwelle auszulösen und dabei sogenannte Blindzündungen vorzusehen. Da diese Blindzündungen dann erfolgen, wenn kein zündfähiges Gemisch vorliegt, wird die Arbeitsweise des Motors dadurch nicht beeinträchtigt. Nachteilig jedoch ist, daß die aufzubringende Zündenergie doppelt so hoch ist, was sich insbesondere bei hohen Drehzahlen bemerkbar macht. Auch auf den Zündkerzenverschleiß wirkt sich diese Lösung nachteilig aus.

Aufgabe der Erfindung ist es, bei einer gattungsgemäßen Viertakt-Brennkraftmaschine eine Möglichkeit zu schaffen, mit geringem Aufwand eine Zuordnung zwischen Kurbelwellenumdrehung und Arbeitstaktabfolge der Zylinder zu schaffen.

Die Aufgabe wird gelöst durch den Hauptanspruch.

Erfindungsgemäß ist vorgesehen, daß, ähnlich wie bei Systemen mit der Blindzündung, während einer Kurbelwellenumdrehung jeder der Zylinder einen Zündimpuls erhält. Damit erfolgt in dem Arbeitsablauf ein Zündimpuls zu Beginn der Arbeitsphase, während der zweite Zündimpuls in den Ausstoßzeitpunkt hineingelegt wird.

Die bereits vorhandenen Aufnehmer und die Logik für die Klopfregelung werden nun herangezogen, um die tatsächlich erfolgten Zündungen von den Blindzündungen zu diskriminieren. Durch den Sensor und die Auswertschaltung läßt sich feststellen, wann tatsächlich eine Verbrennung in dem Zylinder erfolgt ist, und anhand dieses Ergebnisses kann im Zündrechner eine Markierung gesetzt werden, von der aus sich berechnen läßt, daß dieser Zylinder nunmehr lediglich jede zweite Kurbelwellenumdrehung wiederum einen Zündfunken erhalten muß.

Damit kann der Zusatzaufwand, der zur Festlegung notwendig ist, entfallen. Der hohe Energieaufwand, der bei anderen Zündungssystemen notwendig ist, wird jedoch vermieden, da bereits während des Anlaßvorganges innerhalb der ersten Umdrehungen der Brennkraftmaschine die Markierung festgelegt werden kann, also bevor hohe Drehzahlen erreicht werden.

Zur sicheren Diskriminierung ist es dabei möglich, daß nicht sofort nach der ersten Zündung eines Gemisches bereits die Markierung gesetzt wird, sondern daß eine gewisse Anzahl von Arbeitstakten erfolgt sein müssen, bevor die Markierung gesetzt wird.

Bevorzugte Ausführungsformen sind in den Unteransprüchen beschrieben.

Anspruch 2 beschreibt eine Weiterbildung in der die Markierung nur für einen einzigen Zylinder gesetzt wird, während die Zündzeitpunkte für die übrigen Zylinder durch Zählvorgänge ermittelt werden, die beispielsweise von den Zähnen des Anlasserzahnkranzes abgeleitet werden können. Somit wird ein Referenzzylinder vorgegeben. Die übrigen Zylinder greifen zur Ermittlung des Zündzeitpunktes auf die ohnehin vorgesehenen Zahnkranzsensoren und Zähleranordnung zurück.

Weiterhin ist es möglich, mit der Markierung zusätzlich ein zeitliches Fenster zu öffnen, das für die Abfrage der Klopfregelung zuständig ist. Es ist bekannt, daß das Klopfen eines Zylinders nur während eines bestimmten Zeitraumes im Arbeitstakt der Brennkraftmaschine erfolgen kann, so daß eine Abfrage der entsprechenden Sensorik nur während dieses zeitlichen Fensters notwendig ist. In der Abfolge wiederholt sich dieses zeitliche Fenster ebenfalls alle zwei Kurbelwellenumdrehungen, so daß auch hier die Festlegung des Fensters in Zuordnung zur Kurbelwellenstellung aufgrund der Markierung erfolgen kann.

Im folgenden wird die Erfindung anhand der Figuren erläutert. Es zeigen:

Fig. 1 ein schematisches Blockschaltbild; und

Fig. 2 schematisch angedeutete Impulsfolgen, die die Erfindung erläutern sollen.

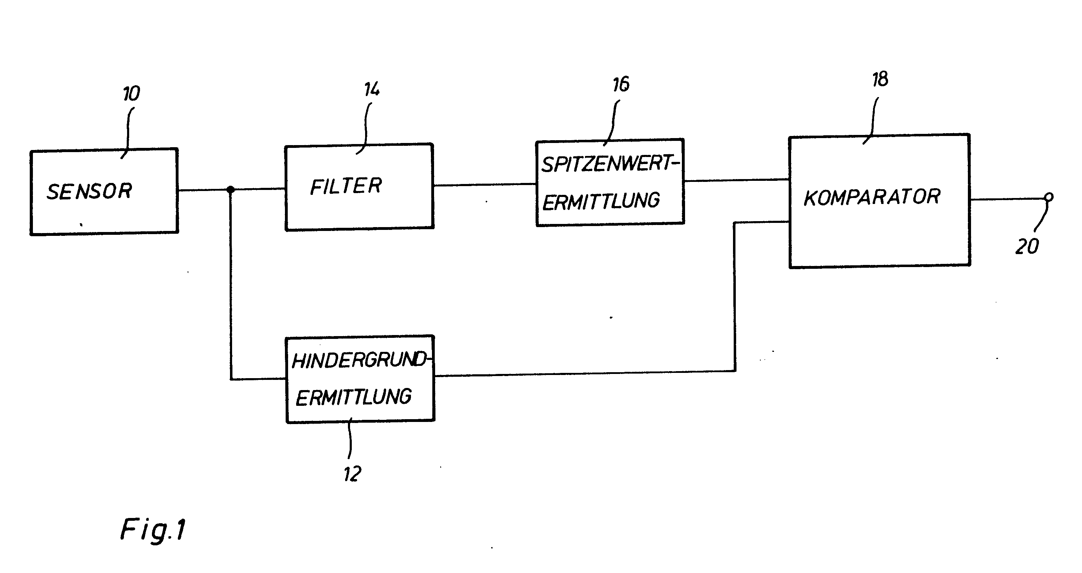

In Fig. 1 ist mit 10 der Sensor bezeichnet, der, vorzugsweise als piezoelektrisches Element, die Druckschwankungen am Zylinderkopf aufnimmt, derartige Sensoren werden zur Erfassung von Klopfgeräuschen verwendet.

Für die vorliegende Erfindung läßt sich das Geräusch außerhalb oder parallel zur Klopfregelung für die Erkennung von Zündvorgängen verwenden, indem in einem ersten Zweig eine Ermittlung des Hintergrundgeräusches im Block 12 erfolgt, während in einem dazu parallelen Zweig ein Filter 14 vorgeschaltet ist, das Geräusche mit der typischen Frequenz von Zündvorgängen herausfiltert.

In dem nachgeschalteten Block 16 erfolgt eine Spitzenwertermittlung. Beide Werte, einmal der Wert aus der Hintergrundermittlung 12, und andererseits der Wert aus der Spitzenwertermittlung 16, werden einem Komparator 18 zugeführt, in dem überprüft wird, ob der Spitzenwert aus der Spitzenwertermittlung 16 signifikant über dem Hintergrund, der durch die Hintergrundermittlung 12 ermittelt worden ist, liegt. Bei Überschreiten des Spitzenwertes wird davon ausgegangen, daß die Zündung eines Gemisches im Zylinder erfolgt ist, und am Ausgang 20 ein entsprechendes Signal geliefert, das dem Zündrechner zugeführt wird.

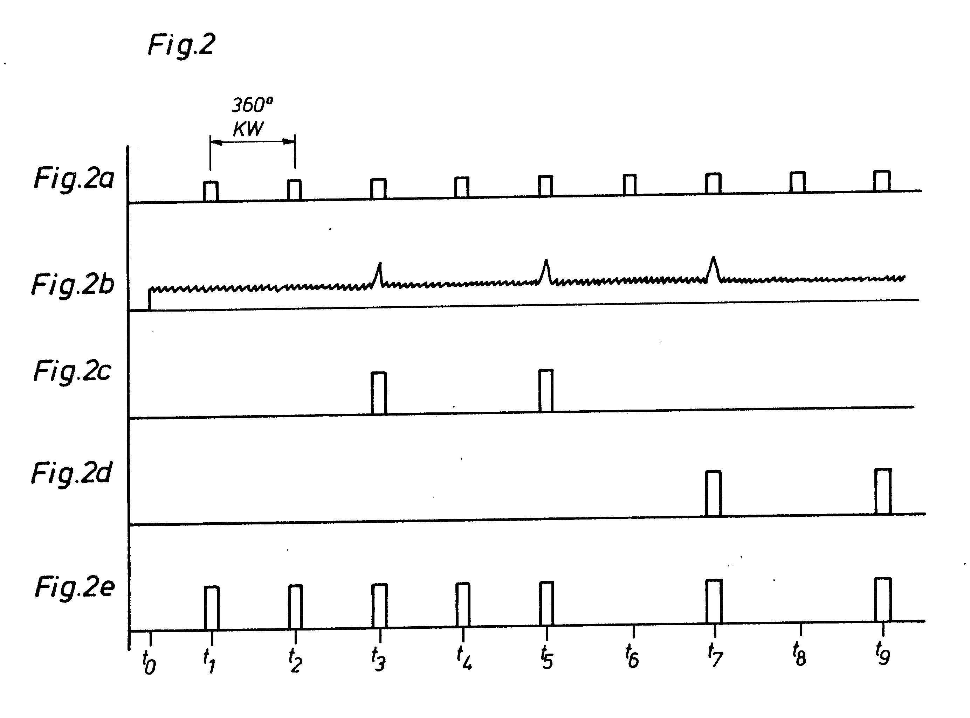

Die Funktion wird anhand des Diagramms in Fig. 2 verdeutlicht.

Fig. 2a zeigt die Referenzimpulse, die von der Kurbelwelle mit jeder Umdrehung abgegeben werden, der Abstand zwischen den einzelnen Referenzimpulsen, die zu den Zeitpunkten t1, t2, ... t9, ... abgegeben werden, haben einen Abstand von 360° Kurbelwellenwinkel.

Fig. 2b zeigt das vom Sensor angegebene Signal, es ist zu erkennen, daß zum Zeitpunkt t3, zum Zeitpunkt t5 und zum Zeitpunkt t7 das Sensorsignal über dem Hintergrundgeräusch liegt.

Diese signifikant über dem Hintergrundgeräusch liegenden Signale führen aufgrund der Logik nach Fig. 1 zu einem Impuls nach Fig. 2c, der im Komparator 18 erzeugt wird. Diese zum Zeitpunkt t3 und t5 entstehenden Impulse liegen zeitlich gleich mit den Kurbelwellenreferenzmarkierungen, während zum Zeitpunkt t4, zu dem ebenfalls die Kurbelwellenreferenzmarkierung die gleiche Winkelstellung erreicht hat wie zum Zeitpunkt t3 oder Zeitpunkt t5, keine Zündung eines zündfähigen Zündgemisches erfolgt ist.

Im vorliegenden Beispiel wird angenommen, daß nach zweimaliger Ermittlung eines Signals, das den Zündvorgang anzeigt, die Markierung im Zündrechner gesetzt wird, so daß nunmehr, ausgehend von diesen vorgegebenen Werten, in Fig. 2d Signale aufgezeigt worden sind, die jede zweite Kurbelwellenumdrehung von dem Zündrechner geliefert werden und den Zeitpunkt angeben, wann an dem zugehörigen Zylinder ein zündfähiges Gemisch vorliegt, so daß zu diesen Zeitpunkten jeweils der Zündfunke geliefert werden soll.

In Fig. 2e ist demzufolge die Abfolge der Zündfunken dargestellt. Zum Zeitpunkt t0 findet der Anlaßvorgang statt, zum Zeitpunkt t1 läuft das erste Mal die Referenzmarkierung der Kurbelwelle in die vorbestimmte Stellung, und dementsprechend wird zum Zeitpunkt t1 ein Zündfunke ausgelöst. 360° Kurbelwellenwinkel später passiert das gleiche zum Zeitpunkt t2, eine Zündung von zündfähigem Gemisch im Zylinder ist jedoch nicht erfolgt.

Zum Zeitpunkt t3 wird wiederum ein Zündimpuls ausgelöst, die erfindungsgemäße Anordnung hat diesmal ein Signal erhalten, das die Verbrennung eines zündfähigen Gemisches im Zylinder anzeigt. Dieses Signal ist in Fig. 2c dargestellt.

Zum darauffolgenden Zeitpunkt t4 wird, da das einmalige Vorhandensein eines Signals noch nicht hinreichend ist für die Entscheidung, wiederum ein Zündimpuls ausgelöst, der jedoch zu keiner Verbrennung führt, da er in den Ausstoßtakt des Zylinders hineingelegt worden ist.

Zum Zeitpunkt t5 erfolgt wiederum ein Signal, das einen Verbrennungsvorgang angezeigt hat, und damit wird nun dem Zündrechner mitgeteilt, daß erst in 720° Kurbelwellenwinkel wiederum eine Zündung notwendig ist, da in 360° Kurbelwellenwinkel im Zylinder kein zündfähiges Gemisch vorliegen wird.

Dementsprechend wird zum Zeitpunkt t6, 360° Kurbelwellenwinkel später, kein Zündimpuls mehr abgegeben, sondern erst zum Zeitpunkt t7, wenn das in Fig. 2d angegebene Signal vom Zündrechner eintritt.

. Dieser Ablauf wiederholt sich alle 720° Kurbelwellenwinkel, so zum Zeitpunkt t9 und im entsprechenden weiteren Betrieb der Brennkraftmaschine.

**Ansprüche**

1. Verfahren zum Betreiben einer mit einem Zündrechner und einer Klopfregelung ausgerüsteten fremdgezündeten Viertakt-Brennkraftmaschine, dadurch gekennzeichnet, daß während eines ersten Zeitabschnittes, beginnend mit dem Anlaßvorgang, jeder Zylinder pro Kurbelwellenumdrehung jeweils mindestens einen Zündimpuls erhält, über die Sensoren und die zugehörige Auswertschaltung der Klopfregelung die Zündvorgänge erfaßt werden, und nach mindestens einem Zündvorgang im Zündrechner eine Zylindermarkierung gesetzt wird, die im darauffolgenden zweiten Zeitabschnitt die Zuordnung von Kurbelwellenstellung und Zündimpuls für den Betrieb festlegt.

2. Verfahren nach Anspruch 1, dadurch gekennzeichnet, daß die Markierung nur für einen Referenzzylinder gesetzt wird und die Festlegungen für die übrigen Zylinder durch Zählvorgänge ermittelt werden.

3. Verfahren nach Anspruch 1 oder 2, dadurch gekennzeichnet, daß die Markierung zusätzlich den Beginn eines zeitlichen Fensters zur Abfrage der Klopfregelung definiert.

4. Verfahren nach einem der vorhergehenden Ansprüche, dadurch gekennzeichnet, daß die genaue Stellung der Kurbelwelle über eine Referenzmarkierung am Zahnkranz des der Kurbelwelle zugeordneten Schwungrades erfaßt wird.

Fig.1

0 289 891

Fig.2

0 289 891

Fig.2a  360°
KW

Fig.2b

Fig.2c

Fig.2d

Fig.2e

$t_0$  $t_1$  $t_2$  $t_3$  $t_4$  $t_5$  $t_6$  $t_7$  $t_8$  $t_9$